# EUROPEAN PATENT APPLICATION

(11) **EP 4 443 335 A1**
(43) Date of publication of application: **09.10.2024**
(21) Application number: 22913650.2
(22) Date of filing: 12.10.2022
(51) Int. Cl.: G06N 3/08

(54) **NEURAL NETWORK ARCHITECTURE SEARCH METHOD, APPARATUS AND DEVICE, AND STORAGE MEDIUM**

(30) Priority: 29.12.2021 CN 202111641483
(71) Applicant: Huawei Cloud Computing Technologies Co., Ltd., Gui'an New District, Guizhou 550025 (CN)
(72) Inventor: LIANG, Zhipeng, Guizhou 550025 (CN); ZHOU, Weimin, Guizhou 550025 (CN); LI, Yi, Guizhou 550025 (CN); DAI, Zonghong, Guizhou 550025 (CN)
(74) Representative: Grünecker Patent- und Rechtsanwälte PartG mbB
(86) International application number: PCT/CN2022/124950
(87) International publication number: WO 2023/124386

(57) **Abstract**

A neural network architecture search method, apparatus, and device, and a storage medium are provided, and pertain to the field of deep learning technologies. The method includes: receiving an optimization request, where the optimization request includes a model file and an optimization requirement of a to-be-optimized model, and the optimization requirement includes a performance requirement and a hardware requirement (401); performing neural architecture search processing in search space based on the model file, to obtain a neural network architecture that meets the optimization requirement (402); and returning the neural network architecture (403). According to this method, the model file can be used for neural architecture search, so that a public data set is not needed for the neural architecture search, and a found neural network architecture is suitable for a local service.

## Description

This application claims priority to Chinese Patent Application No. 202111641483.X, filed on December 29, 2021 and entitled "NEURAL NETWORK ARCHITECTURE SEARCH METHOD, APPARATUS AND DEVICE, AND STORAGE MEDIUM", which is incorporated herein by reference in its entirety.

### TECHNICAL FIELD

This application relates to the field of deep learning technologies, and in particular, to a neural network architecture search method, apparatus, and device, and a storage medium.

### BACKGROUND

With the development of deep learning technologies, a neural network model is used in more fields. When an existing neural network model cannot meet a performance requirement, even if the neural network model is trained, the performance requirement cannot be met, and the neural network model needs to be replaced with a neural network model that meets the performance requirement. However, when the neural network model is replaced with a new neural network model, a large amount of debugging needs to be performed. This takes a long time and consumes a large quantity of hardware resources. In this case, a neural architecture search (neural architecture search, NAS) technology emerges. In the NAS technology, an architecture of a neural network model can be automatically designed, time for debugging a new neural network model is shortened, and costs of model optimization are reduced.

Currently, a principle of the NAS technology is as follows: A public data set is used for founding a neural network architecture in search space based on a performance requirement. When a user subsequently uses the neural network architecture, data of a local service is used for training the neural network architecture, to obtain a new neural network model.

Currently, the public data set is used for searching for the neural network architecture. The public data set is usually greatly different from the data of the local service, so that the found neural network architecture may not be suitable for the local service.

### SUMMARY

This application provides a neural network architecture search method, apparatus, and device, and a storage medium, so that a found neural network architecture is suitable for a local service.

According to a first aspect, this application provides a neural network architecture search method, where the method includes:
receiving an optimization request, where the optimization request includes a model file and an optimization requirement of a to-be-optimized model, and the optimization requirement includes a performance requirement and a hardware requirement; performing neural architecture search processing in search space based on the model file, to obtain a neural network architecture that meets the optimization requirement; and returning the neural network architecture.

In the solution shown in this application, the neural network architecture that meets the optimization requirement may be obtained through search based on the model file and the optimization requirement of the to-be-optimized model. In comparison with a conventional technology, in this method, a user does not need to input a training data set, and optimization of an original user input model is completed based on a model file provided by the user and an optimization requirement of the user, to improve convenience and security of model architecture search. In addition, the method further obtains, based on the model input by the user, a neural network architecture that better matches a user service.

In a possible implementation, the performance requirement includes at least one of an inference latency, a recall rate, and accuracy, and the hardware requirement includes at least one of a hardware specification and an occupied memory size of an optimized model during deployment of the optimized model.

In a possible implementation, the performing neural architecture search processing in the search space based on the model file, to obtain the neural network architecture that meets the optimization requirement includes: determining, based on the model file, at least one data generation model corresponding to the to-be-optimized model; generating a data set by using the at least one data generation model, where the data set includes training data, and distribution of the training data in the data set and training data for obtaining the to-be-optimized model meets a similarity condition; and performing neural architecture search processing in the search space based on the data set, to obtain the neural network architecture that meets the optimization requirement.

In the solution shown in this application, the at least one data generation model corresponding to the to-be-optimized model is first determined based on the model file, and the data set is generated by using the at least one data generation model. Then, neural architecture search processing is performed in the search space based on the data set, to obtain the neural network architecture that meets the optimization requirement. In this case, because the distribution of the training data in the data set and the training data for obtaining the to-be-optimized model meets the similarity condition, it is equivalent to performing neural architecture search processing based on the training data of the to-be-optimized model, so that the obtained neural network architecture is more suitable for the local service.

In a possible implementation, the determining, based on the model file, the at least one data generation model corresponding to the to-be-optimized model includes: determining, based on the model file, a data generation model corresponding to each label type of the to-be-optimized model; and the generating the data set by using the at least one data generation model includes: generating, by using the data generation model corresponding to each label type, training data corresponding to each label type, where the training data corresponding to each label type forms the data set.

In the solution shown in this application, each label type corresponds to one data generation model, and the training data corresponding to each label type is generated by using the data generation model corresponding to each label type, so that the data set used for neural architecture search processing includes data of each label type, and the found neural network architecture is more suitable for the local service.

In a possible implementation, the determining, based on the model file, the at least one data generation model corresponding to the to-be-optimized model includes: for a target label type of the to-be-optimized model, generating, by using an initial data generation model corresponding to the target label type, at least one piece of training data corresponding to the target label type, where each piece of training data includes input data and a calibration predicted value; inputting the input data of each piece of training data into the to-be-optimized model, to obtain an inference result corresponding to each piece of training data; determining, based on the inference result corresponding to each piece of training data and the calibration predicted value of each piece of training data, a loss value corresponding to each piece of training data; updating a weight parameter of the initial data generation model based on the loss value corresponding to each piece of training data; and determining, based on an updated initial data generation model, a data generation model corresponding to the target label type.

In the solution shown in this application, for the target label type, the inference result output by the to-be-optimized model (in other words, an expected model) indicates the training data generated by the data generation model corresponding to the target label type, and updates the data generation model, so that the training data generated by the data generation model is increasingly close to the training data of the to-be-optimized model. In this case, it is equivalent to using the training data of the to-be-optimized model during neural architecture search, so that the obtained neural network architecture is more suitable for the local service.

In a possible implementation, before the generating the at least one piece of training data corresponding to the target label type, the method further includes: obtaining a target neural network model for generating data; and performing random initialization on a weight parameter of the target neural network model, to obtain the initial data generation model corresponding to the target label type. In this case, the initial data generation model corresponding to each label type can be obtained based on the random initialization.

In a possible implementation, the optimization requirement further includes a type of inference data inferred by the to-be-optimized model, and the type of the inference data is a text type or an image type; and the obtaining the target neural network model for generating data includes: obtaining the target neural network model that generates the data of the same type as the type of the inference data.

In the solution shown in this application, the optimization requirement may further include the type of the inference data inferred by the to-be-optimized model, and the type is the text type or the image type. When the target neural network model of the initial data generation model is obtained, the target neural network model that can also generate the type of data is obtained, so that it is more likely that distribution of the generated data and the training data of the to-be-optimized model meets a similarity condition.

In a possible implementation, the data generation model is a generative adversarial network (generative adversarial network, GAN) model. In this case, because the GAN model can generate a plurality of pieces of data at a time, time for neural network architecture search processing can be shortened.

In a possible implementation, the performing neural architecture search processing in the search space based on the data set, to obtain the neural network architecture that meets the optimization requirement includes: optimizing the search space based on the hardware requirement; training a super net in an optimized search space based on the data set, to obtain a trained super net; generating a plurality of pieces of training data by using the trained super net, where each piece of training data includes a performance indicator value indicated by a neural network model and the performance requirement; training an evaluation model based on the plurality of pieces of training data, to obtain a trained evaluation model; and obtaining, through search based on the trained evaluation model, the plurality of pieces of training data, and an evolution algorithm, the neural network architecture that meets the performance requirement.

In the solution shown in this application, the search space is optimized based on the hardware requirement, so that the search space can be reduced, and a search speed can be improved. In addition, the neural network architecture that meets the performance requirement can be obtained based on the plurality of pieces of training data, the evaluation model, and the evolution algorithm that are generated by using the super net.

According to a second aspect, this application provides a neural network architecture search apparatus, where the apparatus includes one or more models, and the one or more modules are configured to implement the neural network architecture search method in the first aspect.

According to a third aspect, this application provides a neural network architecture search computing device. The computing device includes a processor and a memory, where the memory stores computer instructions, and the processor executes the computer instructions, to implement the neural network architecture search method in the first aspect.

According to a fourth aspect, this application provides a computer-readable storage medium, where the computer-readable storage medium stores computer instructions. When the computer instructions in the computer-readable storage medium are executed by a computing device, the computing device is enabled to perform the neural network architecture search method in the first aspect.

According to a fifth aspect, this application provides a computer program product, including computer instructions. When the computer instructions are executed by a computing device, the computing device is enabled to perform the neural network architecture search method in the first aspect.

### BRIEF DESCRIPTION OF DRAWINGS

FIG. 1 is a schematic diagram of a structure of a computing device according to an example embodiment of this application;
FIG. 2 is a schematic diagram of a structure of a search apparatus according to an example embodiment of this application;
FIG. 3 is a schematic diagram of interaction between a user and a cloud platform according to an example embodiment of this application;
FIG. 4 is a schematic flowchart of a neural network architecture search method according to an example embodiment of this application;
FIG. 5 is a process architecture diagram of a neural network architecture search according to an example embodiment of this application;
FIG. 6 is a schematic flowchart of obtaining a data generation model according to an example embodiment of this application;
FIG. 7 is a flow block diagram of obtaining a data generation model according to an example embodiment of this application;
FIG. 8 is a schematic flowchart of neural architecture search according to an example embodiment of this application; and
FIG. 9 is a flow block diagram of training a super net according to an example embodiment of this application.

### DESCRIPTION OF EMBODIMENTS

To make the objectives, technical solutions, and advantages of this application clearer, the following further describes the implementations of this application in detail with reference to the accompanying drawings.

The following explains and describes some terms and concepts in embodiments of this application.

Search space (search space) is a set of candidate neural network architectures in NAS, and a final search result of the NAS belongs to the set.

Model fine-tuning (fine-tuning) means that a neural network model performs training and adjustment on a new data set at a small learning rate based on a weight parameter obtained through training of another data set, to obtain a model matching the new data set. The learning rate is for controlling a rate of adjusting the weight parameter.

Pre-training (pre-training) is a training process in which a large amount of data is trained to obtain a weight parameter of a model. A training process of a neural network model of a local service can be accelerated through pre-training. For example, the local service is a hospital image classification service. For another example, the local service is a text recognition service.

The following describes related background.

In a conventional technology, a public data set is used for founding a neural network architecture in search space based on a performance requirement. When a user subsequently uses the neural network architecture, data of a local service is used for training a neural architecture model, to obtain a new neural network model. Currently, the public data set is used for searching for the neural network architecture. When the public data set is greatly different from the data of the local service, the found neural network architecture may not be suitable for the local service.

In another conventional technology, a user uploads a training data set of the local service, and finds the neural network architecture in the search space based on the performance requirement and the training data set. However, when the user cannot provide the training data set for some reasons (for example, training data is privacy data), or a format of a provided training data set is incompatible, the neural network architecture cannot be obtained through search.

This application provides a neural network architecture search method. A user uploads a model file and an optimization requirement of a to-be-optimized model, and performs neural architecture search processing in search space based on the model file, to obtain a neural network architecture that meets the optimization requirement. Because the model file matches the local service, the model file is used for performing neural architecture search processing, to obtain a neural network architecture suitable for the local service.

The following describes an application scenario and an execution body of embodiments of this application.

Application scenario: Embodiments of this application may be applied to a neural architecture search scenario in which a public data set is used, applied to a scenario in which a user cannot provide a training data set when a neural network model is optimized, or applied to a scenario in which a format of a training data set provided by a user is incompatible when a neural network model is optimized.

Execution body: The execution body may be a neural network architecture search apparatus, and is referred to as a search apparatus for short. In an implementation, the search apparatus may be a hardware apparatus, for example, a computing device such as a server or a terminal. In another implementation, the search apparatus may alternatively be a software apparatus, for example, may be a set of software programs running on a hardware apparatus.

In embodiments of this application, a user logs in by using a terminal device of the user, and connects the terminal device to the search apparatus for interaction with the search apparatus. For example, the user submits an optimization request to the search apparatus by using the terminal device. The optimization request includes a model file and an optimization requirement of a to-be-optimized model. The to-be-optimized model may be a model of any structure. This is not limited in embodiments of this application. The search apparatus provides a neural network architecture obtained through search for the user based on the optimization request.

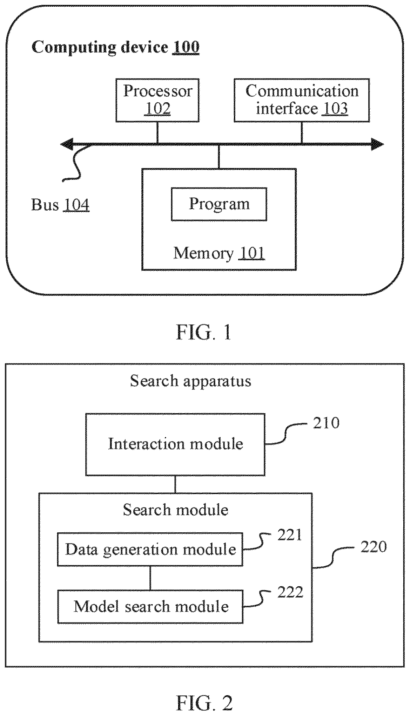

For example, when the search apparatus is a computing device, FIG. 1 provides a schematic diagram of a hardware structure of the computing device. A computing device 100 shown in FIG. 1 includes a memory 101, a processor 102, a communication interface 103, and a bus 104. The memory 101, the processor 102, and the communication interface 103 communicate with each other through the bus 104.

The memory 101 may be a read-only memory (read-only memory, ROM), a random access memory (random access memory, RAM), a hard disk, a flash memory, or any combination thereof. The memory 101 may store a program. When the program stored in the memory 101 is executed by the processor 102, the processor 102 and the communication interface 103 are configured to perform a neural network architecture search method. The memory may further store a data set, and the like. For example, a part of storage resources in the memory 101 are for storing search space, and the like, and a part of storage resources in the memory 101 are for storing a training data set, and the like.

The processor 102 may use a central processing unit (central processing unit, CPU), an application-specific integrated circuit (application-specific integrated circuit, ASIC), a graphics processing unit (graphics processing unit, GPU), or any combination thereof. The processor 102 may include one or more chips. The processor 102 may include an artificial intelligence (artificial intelligence, AI) accelerator, for example, a neural network processing unit (neural processing unit, NPU).

The communication interface 103 uses a transceiver module, for example, a transceiver, to implement communication between the computing device 100 and another device or a communication network. For example, the optimization request may be obtained by using the communication interface 103.

The bus 104 may include a path for transmitting information between components (for example, the memory 101, the processor 102, and the communication interface 103) of the computing device 100.

For example, when the search apparatus is a software apparatus, FIG. 2 provides a schematic diagram of a logical structure of the search apparatus. The search apparatus logically includes an interaction module 210 and a search module 220. For example, the interaction module 210 is configured to interact with another device. In this embodiment of this application, the interaction module 210 may be configured to receive the optimization request uploaded by the user, feed back the neural network architecture to the user, and the like. The search module 220 is configured to obtain, based on the model file, the neural network architecture that meets the optimization requirement.

For example, the search module 220 includes a data generation module 221 and a model search module 222. For example, the data generation module 221 is configured to generate a data set based on the model file uploaded by the user. The model search module 222 is configured to obtain, based on the data set, the neural network architecture that meets the optimization requirement.

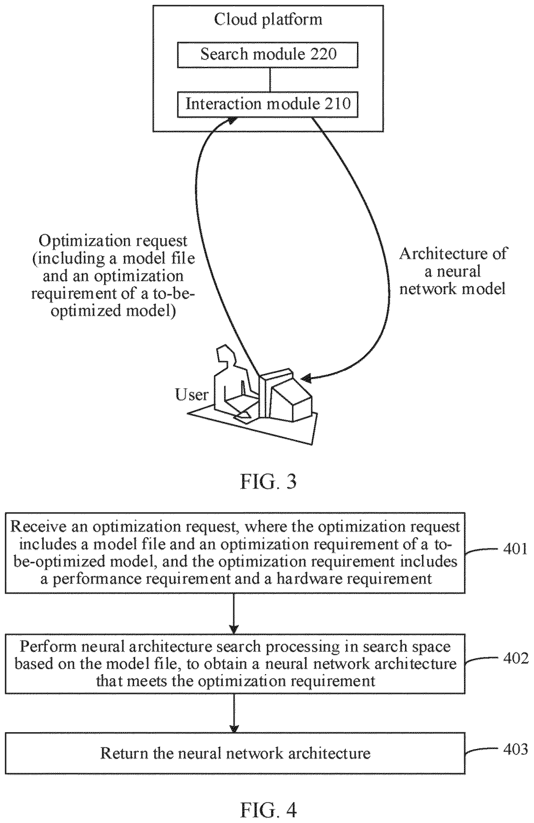

For example, the foregoing search apparatuses may be all deployed on a cloud platform. The cloud platform refers to a platform that provides computing, network, and storage capabilities based on hardware resources and software resources. The cloud platform may also be referred to as a cloud computing platform. The cloud platform includes a large quantity of basic resources (including computing resources, storage resources, and network resources) owned by a cloud service provider. The computing resources may be a large quantity of computing devices, such as servers. As shown in FIG. 3, the search apparatus is abstracted by a cloud server provider into a cloud service on a cloud platform and provided for the user, and the cloud platform provides the cloud service for the user by using the search apparatus deployed on the cloud platform. When using the cloud service, the user may upload the optimization request to the cloud platform. The search apparatus on the cloud platform provides the neural network architecture obtained through search for the user based on the optimization request.

For example, deployment of the search apparatus is flexible. In another implementation, the search apparatus may alternatively be deployed in any two or three environments of a terminal computing device, an edge environment, and a cloud platform. For example, the interaction module 210 is deployed on the terminal computing device, and the data generation module 221 and the model search module 222 are deployed on the cloud platform.

The following describes a specific process of a neural network architecture search method with reference to FIG. 4. Refer to step 401 to step 403. In FIG. 4, an example in which the method is performed by a search apparatus is used for description, and an implementation environment is a cloud environment.

Step 401: Receive an optimization request, where the optimization request includes a model file and an optimization requirement of a to-be-optimized model, and the optimization requirement includes a performance requirement and a hardware requirement.

The to-be-optimized model may be a model for classification, or may be a model for detection. For example, the to-be-optimized model is for classifying hospital images. For another example, the to-be-optimized model is for identifying an object in an image, and the object is specifically an animal, a person, or the like. The optimization requirement includes the performance requirement and the hardware requirement.

In this embodiment, a user optimizes a model, and the model is referred to as the to-be-optimized model. The user accesses the search apparatus by using a terminal device of the user. The user selects or inputs the model file and the optimization requirement of the to-be-optimized model. The terminal device generates the optimization request. The optimization request includes the model file and the optimization requirement of the to-be-optimized model. The terminal device sends the optimization request to the search apparatus. The search apparatus receives the optimization request, and obtains the model file and the optimization requirement of the to-be-optimized model by parsing the optimization request, where the optimization requirement includes the performance requirement and the hardware requirement.

For example, the model file of the to-be-optimized model includes an architecture, a weight parameter, and the like of the to-be-optimized model.

For example, the performance requirement includes at least one of an inference latency, a recall rate, and accuracy. The inference latency refers to duration spent by the optimized model on inference of a specific quantity of pieces of inference data. The recall rate refers to a probability that a positive sample is identified as a positive sample. The accuracy is equal to a quantity of accurately identified samples divided by a quantity of all samples. The hardware requirement includes at least one of a hardware specification and an occupied memory size of the optimized model during deployment of the optimized model. The hardware specification includes but is not limited to a CPU, a GPU, or an NPU. The amount of memory occupied by the model is an amount of memory required for running the optimized model.

Step 402: Perform neural architecture search processing in search space based on the model file, to obtain a neural network architecture that meets the optimization requirement.

In this embodiment, after receiving the model file and the optimization requirement, the search apparatus obtains the search space, and performs neural architecture search processing in the search space based on the model file, to obtain the neural network architecture that meets the optimization requirement. The neural architecture search herein may also be referred to as neural network architecture search.

Step 403: Return the neural network architecture.

In this embodiment, after obtaining the neural network architecture through search, the search apparatus sends the neural network architecture obtained through search to a device used by the user, in other words, returns the neural network architecture obtained through search to the user, where there may be one or more neural network architectures returned to the user. For example, a plurality of neural network architectures are obtained through search, and the plurality of neural network architectures may be returned to the user, or an architecture of one of the plurality of neural network architectures may be returned to the user. After obtaining the neural network architecture returned by the search apparatus, the user may perform full training or model fine-tuning based on data of a local service, in other words, obtain a neural network model suitable for the local service.

For example, when returning the neural network architecture to the device used by the user, the search apparatus may send encoding information of the architecture. After receiving the encoding information, the device of the user may obtain the neural network architecture by parsing the encoding information.

For example, the search apparatus may further return a weight parameter corresponding to the neural network architecture to the user, where the weight parameter is a weight parameter obtained in the neural architecture search. When performing training locally, the user may use the weight parameter as an initial weight parameter, or directly uses a combination of the weight parameter and the neural network architecture as a neural network model corresponding to the local service.

For example, the search apparatus may further return a performance indicator, a hardware indicator, and the like of the neural network architecture to the user. The hardware indicator indicates a parameter of hardware used during deployment of the neural network architecture.

Based on descriptions in FIG. 4, the user uploads the model file of the to-be-optimized model, and the search apparatus obtains, from the search space based on the model file, the neural network architecture that meets the optimization requirement. During the neural architecture search, the model file is used. Because the model file is a model file for local service inference, the obtained neural network architecture can be suitable for the local service.

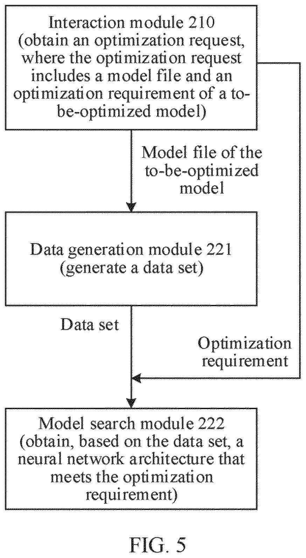

For example, when the search module 220 includes the data generation module 221 and the model search module 222, FIG. 5 provides a flow block diagram in which the search apparatus performs neural network architecture search. In FIG. 5, the interaction module 210 receives the optimization request, the data generation module 221 generates a data generation model based on the model file in the optimization request, and generates a data set by using the data generation model. The model search module 222 obtains the neural network architecture through search based on the data set and the optimization requirement that is in the optimization request.

When there is one data generation model, processing in step 402 is as follows:

The search apparatus determines, based on the model file, one data generation model corresponding to the to-be-optimized model, and generates a data set by using the data generation model, where distribution of training data in the data set and training data for obtaining the to-be-optimized model meets a similarity condition; and performs neural architecture search processing in the search space based on the data set, to obtain the neural network architecture that meets the optimization requirement.

In this embodiment, the search apparatus obtains a preset initial data generation model, generates at least one piece of training data by using the initial data generation model, where each piece of training data includes input data and a calibration predicted value; and inputs the input data of each piece of training data into the to-be-optimized model, to obtain an inference result corresponding to each piece of training data. The search apparatus determines a difference between the inference result corresponding to each piece of training data and the calibration predicted value, to obtain a loss value corresponding to each piece of training data. A loss function for calculating the loss value herein may be a cross-entropy loss function. The loss function is not limited in this embodiment of this application.

When the at least one piece of training data includes a plurality of pieces of training data, the search apparatus adds loss values corresponding to the plurality of pieces of training data, to obtain a total loss value. When the at least one piece of training data includes one piece of training data, a loss value of the one piece of training data is a total loss value. The search apparatus updates a weight parameter of the initial data generation model based on the total loss value, to obtain an updated initial data generation model. The search apparatus generates the at least one piece of training data by using the updated initial data generation model, and then re-executes a process of generating the at least one piece of training data for a target quantity of times of iterations, until a data generation model is obtained, and determines the data generation model as the data generation model corresponding to the to-be-optimized model.

Then, the search apparatus generates a plurality of pieces of training data by using the data generation model, and the plurality of pieces of training data form the data set. Because the data generation model is obtained based on the model file, the distribution of the training data in the data set and the training data for obtaining the to-be-optimized model meets the similarity condition. For example, the training data in the data set is the same as or close to at least one of a variance and an average value of the training data for obtaining the to-be-optimized model. The search apparatus loads stored search space, and performs neural architecture search processing in the search space based on the data set, to obtain the neural network architecture that meets the optimization requirement.

It should be noted that the data set includes training data corresponding to each label type of the to-be-optimized model.

When there are a plurality of data generation models, and each label type corresponds to one data generation model, for a process of obtaining the neural network architecture based on the model file, refer to step 501 to step 503.

Step 501: Determine, based on the model file, the data generation model corresponding to each label type of the to-be-optimized model.

In this embodiment, the search apparatus determines a data generation model for each label type based on the model file of the to-be-optimized model, to obtain the data generation model corresponding to each label type. For example, if there are five label types of the to-be-optimized model, five data generation models are generated.

For example, the data generation model may be a GAN model, or the data generation model may be a dream (dream) model, or the like. The dream model is either a distillation or an extraction (distill) model. A principle of the GAN model is as follows: The GAN model includes a generation model and a discriminative model, where the generation model is for generating a sample similar to real training data, and the discriminative model is for determining whether the sample generated by the generation model is a real sample. When the sample generated by the generation model is identified as a real sample by the discriminative model, training of the GAN model is complete.

Step 502: Generate, by using the data generation model corresponding to each label type, training data corresponding to each label type, where the training data corresponding to each label type form the data set, and the distribution of the training data in the data set and the training data for obtaining the to-be-optimized model meets the similarity condition.

In this embodiment, the search apparatus generates, by using the data generation model corresponding to each label type, the training data corresponding to each label type, and forms the data set based on training data corresponding to all label types. The distribution of the training data in the data set and the training data for obtaining the to-be-optimized model meets the similarity condition. For example, the training data in the data set is the same as or close to at least one of a variance and an average value of the training data for obtaining the to-be-optimized model. For ease of description, the training data for obtaining the to-be-optimized model is referred to as original training data for short subsequently.

For example, the data generation model corresponding to each label type may generate a plurality of pieces of training data at a time, or may generate only one piece of training data each time. This is not limited in this embodiment of this application.

Step 503: Perform neural architecture search processing in the search space based on the data set, to obtain the neural network architecture that meets the optimization requirement.

In this embodiment, the search apparatus loads the stored search space, and performs neural architecture search processing in the search space based on the data set, to obtain the neural network architecture that meets the optimization requirement.

In the process shown in step 501 to step 503, when the user does not provide a training data set, the search apparatus automatically generates the data set. Because the distribution of the training data in the data set and the training data for obtaining the to-be-optimized model meets the similarity condition, the neural architecture search processing is performed based on the data set, so that the neural network architecture that meets the local service of the user can be obtained.

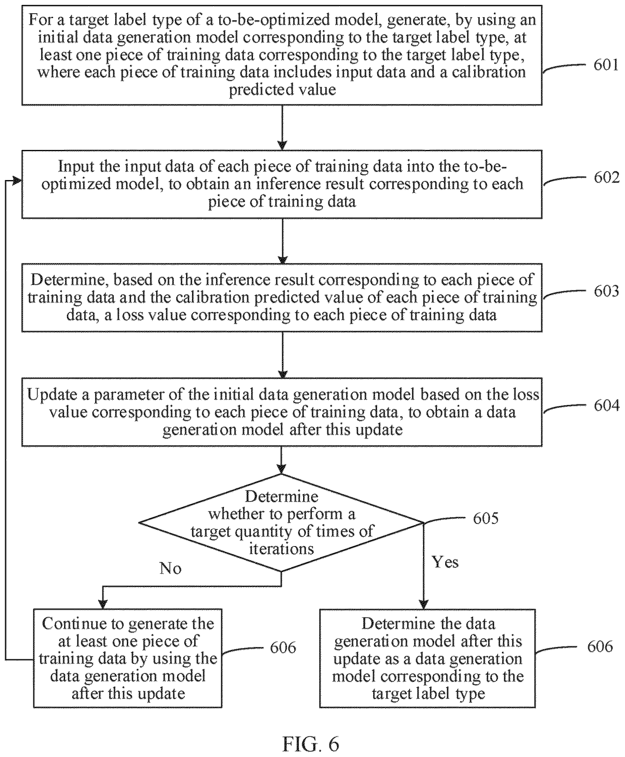

In a possible implementation, for a manner of determining the data generation model in step 501, refer to step 601 to step 606 in FIG. 6. The following uses an example in which a data generation model corresponding to a target label type is determined for description.

Step 601: For a target label type of the to-be-optimized model, generate, by using an initial data generation model corresponding to the target label type, at least one piece of training data corresponding to the target label type, where each piece of training data includes input data and a calibration predicted value.

In this embodiment, the label type refers to a type of inference data that can be identified by the to-be-optimized model. For example, the to-be-optimized model is for classifying eight types of animal pictures, where there are eight label types in total. Initial data generation models corresponding to all label types are neural network models and have a same network architecture.

The search apparatus obtains the initial data generation model corresponding to each label type, for example, obtains the initial data generation model corresponding to each label type from another device. For a label type (which is referred to as the target label type) of the to-be-optimized model, the search apparatus generates the at least one piece of training data by using the initial data generation model corresponding to the target label type. Each piece of training data includes the input data and the calibration predicted value. The calibration predicted value indicates that a value of a probability that the input data belongs to the target label type is 1, and the calibration predicted value may also be referred to as a label. Herein, when the at least one piece of training data includes a plurality of pieces of training data, the search apparatus may generate one piece of training data at a time, or may generate a plurality of pieces of training data at a time.

For example, the search apparatus may further obtain, based on a preset neural network model, the initial data generation model corresponding to each label type, and processing is as follows:
obtaining a target neural network model for generating data, and performing random initialization on a weight parameter of the target neural network model, to obtain the initial data generation model corresponding to the target label type.

In this embodiment, the search apparatus stores a neural network model for generating data, and the neural network model is referred to as the target neural network model. For each label type, the search apparatus randomly initializes the weight parameter of the target neural network model, to obtain the initial data generation model corresponding to each label type. Network architectures of initial data generation models corresponding to all label types are the same, but have different weight parameters.

For example, to enable data generated by the data generation model to better match the to-be-optimized model, when the user inputs an optimization requirement, the optimization requirement includes a type of inference data inferred by the to-be-optimized model, and the type is a text type or an image type. In this case, obtaining the target neural network model is to obtain the target neural network model that generates the data of the same type as the type of the inference data, so that a type of the data generated by the data generation model is the same as the type of the inference data. For example, the to-be-optimized model is for classifying images, and the target neural network model is for generating an image.

Step 602: Input the input data of each piece of training data into the to-be-optimized model, to obtain an inference result corresponding to each piece of training data.

In this embodiment, the search apparatus inputs the input data of each piece of training data into the to-be-optimized model, and the to-be-optimized model outputs the inference result corresponding to each piece of training data.

Step 603: Determine, based on the inference result corresponding to each piece of training data and the calibration predicted value of each piece of training data, a loss value corresponding to each piece of training data.

In this embodiment, the search apparatus determines a difference between the inference result corresponding to each piece of training data and a corresponding calibration predicted value, to obtain the loss value corresponding to each piece of training data. A loss function for calculating the loss value herein may be a cross-entropy loss function. The loss function is not limited in this embodiment of this application.

Step 604: Update a parameter of the initial data generation model based on the loss value corresponding to each piece of training data, to obtain a data generation model after this update.

In this embodiment, when the at least one piece of training data includes a plurality of pieces of training data, the search apparatus adds loss values corresponding to the plurality of pieces of training data, to obtain a total loss value. The search apparatus updates a weight parameter of the initial data generation model based on the total loss value, to obtain a data generation model after this update.

Step 605: Determine whether to perform a target quantity of times of iterations.

Step 606: If the target quantity of times of iterations are performed, determine the data generation model after this update as the data generation model corresponding to the target label type; and if the target quantity of times of iterations are not performed, continue to generate the at least one piece of training data by using the data generation model after this update, and re-perform step 602 to step 606.

The target quantity may be preset, and is stored in the search apparatus.

In this embodiment, the search apparatus generates the at least one piece of training data by using the data generation model after this update, and then re-performs step 602 to step 606 for the target quantity of times of iterations, until a data generation model is obtained, and determines the data generation model as the data generation model corresponding to the target label type. In this case, the data generation model corresponding to the target label type is obtained, and all data generation models corresponding to other label types can be determined by using the process in FIG. 6.

It should be noted herein that, after the target quantity of times of iterations are performed in the process shown in FIG. 6, training of the data generation model is stopped. To obtain a more accurate data generation model, whether the loss value is less than or equal to a preset loss value may be determined after the target quantity of times of iterations are performed. If the loss value is less than or equal to the preset loss value, it is determined that the training is completed. If the loss value is greater than the preset loss value, the training may continue until the loss value is less than or equal to the preset loss value.

It should be further noted that, in the process shown in FIG. 6, if the to-be-optimized model is for classification, the inference result includes values of probabilities belonging to various label types. When the loss value is calculated, subtraction of a probability value of the calibration predicted value and the probability value in the inference result may be directly performed. If the to-be-optimized model is for detection, the inference result includes the label type, and a location and an area of a detection box. When the loss value is calculated, subtraction of the probability value of the calibration predicted value and the probability value in the inference result may be performed, a difference between locations of the detection box is calculated, a difference between areas of the detection box is calculated, and the difference between the probability values, the difference between the locations of the detection box, and the difference between the areas of the detection box are weighted, to obtain the loss value.

In the process in FIG. 6, the inference result of the training data that is generated by the data generation model and that is inferred by the to-be-optimized model is close to the calibration predicted value of the training data, indicating that the training data generated by the data generation model is similar to original training data. In this way, after a data set is generated based on the data generation model corresponding to each label type, distribution of training data in the data set and the original training data meets a similarity condition.

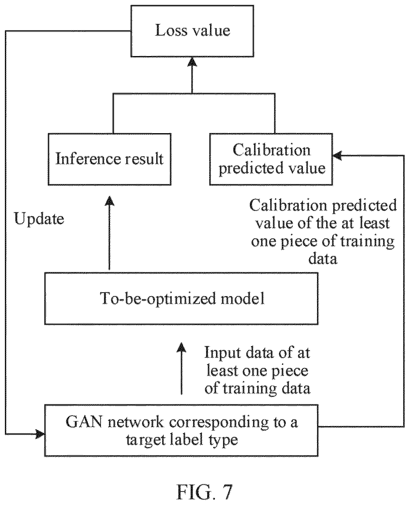

In the process shown in FIG. 6, the data generation model may be a GAN model, and each label type corresponds to one GAN model. FIG. 7 is a schematic diagram of obtaining a GAN model corresponding to a target label type. In FIG. 7, an initial GAN model corresponding to the target label type generates at least one piece of training data. The at least one piece of training data is separately input into a to-be-optimized model, to obtain an inference result of each piece of training data. A loss value between the inference result of each piece of training data and a label predicted value of each piece of training data is calculated, and the initial GAN model is updated based on the loss value. The update process is re-executed until the GAN model corresponding to the target label type is obtained. In this case, for each label type, the GAN model is updated based on an output result of the to-be-optimized model and a calibration predicted value of data generated by the GAN model, so that the data generated by the GAN model is closer to original training data.

In the process shown in FIG. 6, training data is generated by using a data generation model. In addition, a data generation model corresponding to each label type may further generate test data. A set formed by the test data is referred to as a test set. An amount of test data in the test set is less than an amount of training data. For example, a ratio of the amount of test data in the test set to the amount of training data is 20:80 or 10:90. After a data generation model is obtained through training of the training data, the test set may be used for model prediction on the data generation model obtained through training, to measure performance and an inference capability of the data generation model obtained through training. When the performance and the inference capability of the data generation model do not meet a requirement, the data generation model continues to be trained until a data generation model that meets an inference capability requirement and a performance requirement is obtained by using the test set.

In addition, when there are a plurality of data generation models, a plurality of label types may correspond to one data generation model. A process of obtaining the data generation model is similar to the foregoing process of obtaining one data generation model, and details are not described herein again.

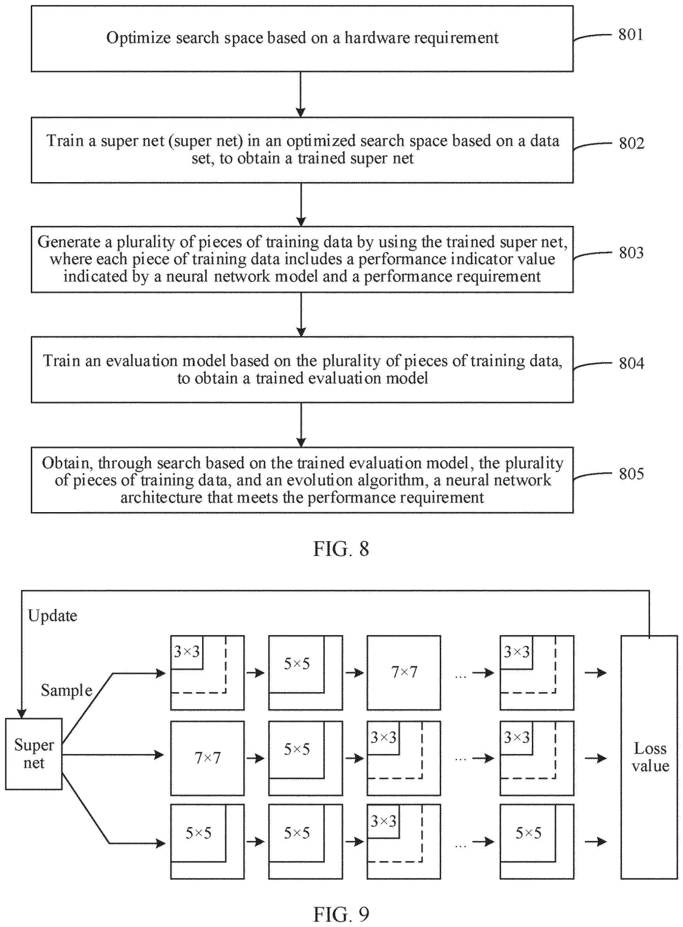

In a possible implementation, after a data set is obtained, for a processing process of performing neural architecture search based on the data set, refer to FIG. 8. For details, refer to step 801 to step 805. The process shown in FIG. 8 is as follows:

Step 801: Optimize search space based on a hardware requirement.

The search space is a set of candidate neural network architectures in NAS, and a final search result of the NAS belongs to the set.

In this embodiment, a search apparatus removes, from the search space based on a hardware specification and an amount of memory occupied by a model that are in a hardware requirement, a neural network architecture that does not meet the hardware requirement, to obtain an optimized search space.

The search apparatus may encode a model architecture in the search space, so that the neural network architecture in the search space can be identified by a module that is in the search apparatus and that performs neural architecture search.

Step 802: Train a super net (super net) in the optimized search space based on the data set, to obtain a trained super net.

The super net is the largest model in the entire optimized search space. In the optimized search space, another model may be considered as a model obtained by tailoring a part of a network architecture of the super net. In other words, all models in the search space are subsets of the super net.

In this embodiment, the search apparatus trains the super net based on the obtained data set (for example, the data set obtained in step 503, and for another example, a data set generated by using a data generation model corresponding to a to-be-optimized model). The super net is trained in a training manner of sharing a weight of each model obtained by tailoring the super net, and each model obtained by tailoring the super net may be referred to as a subnet. For example, a training process is as follows:

The super net is tailored to obtain a plurality of subnets. Only a part of weight parameters related to the subnet in the super net are updated each time based on training data, and a parameter of another part remain unchanged. For example, as shown in FIG. 9, a convolution kernel at a layer of the super net is updated, and three subnets are sampled from the super net. Each subnet includes a plurality of layers. For the 1^{st} layer of the 1^{st} subnet, only a 3×3 convolution kernel is updated. For the 1^{st} layer of the 2^{nd} subnet, a 7x7 convolution kernel is updated. For the 1^{st} layer of the 3^{rd} subnet, a 5×5 convolution kernel is updated. By analogy, only the weight parameter included in the subnet is updated at each layer. The training data is input into the plurality of subnets, loss values corresponding to the subnets are calculated, and the loss values of the subnets are added, to obtain a total loss value. Weight parameters of the subnets in the super net are updated based on the total loss value. Then, the search apparatus re-samples the subnet, and executes the foregoing process until a quantity of times of iterations reaches the maximum, to obtain the trained super net.

It should be noted that the foregoing is merely an example of a manner of training the super net. In this embodiment of this application, the super net may alternatively be trained in another manner, and the manner of training the super net is not limited.

Step 803: Generate a plurality of pieces of training data by using the trained super net, where each piece of training data includes a performance indicator value indicated by a neural network model and a performance requirement.

In this embodiment, after the trained super net is obtained, a model set is selected according to a preset rule. For example, neural network models are randomly selected from the super net to form a model set.

The search apparatus determines a performance indicator value corresponding to each neural network model in the model set. For example, a manner of determining the performance indicator value corresponding to each neural network model may be: data in a data set is input into each neural network model, to obtain an inference result corresponding to each piece of data. Accuracy, a recall rate, and the like are obtained based on the inference result corresponding to each piece of data and a calibration predicted value of each piece of data. For an inference latency, each neural network model is deployed on a device with the hardware requirement entered by a user, to determine an inference latency corresponding to each neural network model. In this case, a correspondence relationship between the neural network models and various performance indicator values may be obtained, and the neural network model and the performance indicator value are in one-to-one correspondence. For example, one neural network model corresponds to one performance indicator value, and this is one piece of training data.

Step 804: Train an evaluation model based on the plurality of pieces of training data, to obtain a trained evaluation model.

In this embodiment, each performance indicator corresponds to one evaluation model. For example, in a classification task, prediction of accuracy of classification is performed by an independent evaluation model, and an inference latency is also performed by an independent evaluation model. The evaluation model may be a recurrent neural network (recurrent neural network, RNN).

When each performance indicator is used, the search apparatus performs iterative training on the evaluation model based on the training data in which the neural network model and the performance indicator value are in one-to-one correspondence, to obtain the trained evaluation model. In this case, each performance indicator corresponds to one trained evaluation model.

It should be noted that, in step 804, each performance indicator corresponds to one evaluation model. In some other implementations, a plurality of performance indicators may jointly correspond to one evaluation model. In other words, after one neural network model is input into the evaluation model, various performance indicator values corresponding to the neural network model can be output.

Step 805: Obtain, through search based on the trained evaluation model, the plurality of pieces of training data, and an evolution algorithm, a neural network architecture that meets the performance requirement.

In this embodiment, the evolution algorithm may be a genetic algorithm (genetic algorithm), and the genetic algorithm is an optimization model simulating the Darwin's theory of biological evolution.

A process of searching by using the genetic algorithm is as follows:

Step 1: Initial generation setting: The search apparatus uses the plurality of pieces of training data for training the evaluation model as an initial generation, where an adaptation value of the initial generation is a performance indicator value corresponding to a neural network model.

Step 2: Iteration setting: Set a maximum quantity of times of iterations, and set a current iteration g to 1.

Step 3: Individual selection: Design a suitable selection policy to select a neural network model. The selected neural network model (which may be referred to as a parent individual) enters a mating pool to form a parent population, and the parent population is used for cross mutation to generate a new individual, in other words, to generate a new neural network model. The selection policy herein may be determined based on the adaptation value. For example, when an optimization problem is a maximum value problem, a probability that an individual with a larger adaptation value is selected is high. For example, the selection policy is a championship policy.

In step 3, in a cross mutation process, whether the parent individual needs to perform a cross operation may be determined based on a cross probability, where the cross probability may be preset, for example, 0.9.

In step 3, in the cross mutation process, whether the parent individual needs to perform a mutation operation may be determined based on a mutation probability, where the mutation probability may be preset, for example, 0.1. In the cross mutation process, a function of mutation is to maintain diversity of a population and prevent the population from falling into local optimality. Therefore, the mutation may be designed as random mutation.

Step 4: After the cross mutation operation is performed, the parent population generates a new child population, and a quantity of times of iterations of the population is g=g+1. A next round of iteration operation is performed, in other words, step 3 is returned to until the quantity of times of iterations reaches a specified maximum quantity of times of iterations. An optimal performance indicator value and a corresponding neural network model are selected as a found neural network model, and an architecture of the neural network model is the neural network architecture that meets the optimization requirement.

In a search process, each time a neural network model of one child generation is obtained, the neural network model may be input into the evaluation model, to determine a performance indicator value of the neural network model.

It should be noted that the process shown in FIG. 8 is merely a manner of neural architecture search, and the manner of neural architecture search is not limited in this embodiment of this application.

In this embodiment of this application, the user does not need to provide a training data set, and only provides a model file of the to-be-optimized model, so that the data generation model can be trained, to learn of a feature of original training data of the to-be-optimized model. An optimized neural network architecture can be provided for the user by using a data set generated by the data generation model, so that not only the user can optimize the neural network architecture by using a cloud platform, but also user privacy can be protected because the user does not provide the training data set. In addition, a plurality of performance indicators can be simultaneously optimized, so that performance of the optimized neural network architecture is better.

The following describes effect of the solution in embodiments of this application with reference to two examples.

First example: Auser provides a residual network (residual network, ResNet) 26 model. A classification accuracy of a private data set used by the user is 88.94%. The user wants to improve the classification accuracy of the model. However, training data cannot be provided due to a privacy issue. A search apparatus learns a feature of original training data of the model by using a GAN model, to generate data of different label types as a data set for neural architecture search. Then, a neural network model and a corresponding classification accuracy are sampled from a super net, and an evaluation model for determining a classification accuracy is trained by using the neural network model and the classification accuracy that are obtained through sampling. Finally, a neural network architecture with the highest accuracy is output through iterative search by using a genetic algorithm of the neural architecture search. After obtaining the neural network architecture, the user performs model training on the neural network architecture based on a data set of a local service, where a classification accuracy of a trained model is higher than that of an original model. In the first example, the user can optimize the neural network model without providing a data set.

Second example: A user provides a ResNet 26 model. A classification accuracy of a private data set used by the user is 88.94%. The user wants to improve the classification accuracy of the model and reduce an inference latency. However, training data cannot be provided due to a privacy issue. A search apparatus learns a feature of original training data of the model by using a GAN model, to generate data of different label types as a data set for neural architecture search. Then, a neural network model and a corresponding classification accuracy are sampled from a super net, and an evaluation model for determining a classification accuracy is trained by using the neural network model and the classification accuracy that are obtained through sampling. Then, inference latencies of these sampled neural network models running on a device with a hardware specification input by the user are tested, and an evaluation model for determining an inference latency is trained. Finally, a neural network architecture is output through iterative search by using a genetic algorithm of the neural architecture search. The neural network architecture has a low inference latency and a high classification accuracy. After obtaining the neural network architecture, the user performs model training on the neural network architecture based on a data set of a local service, where a classification accuracy of a trained model is higher than that of an original model, and an inference latency is also reduced. In the second sub-example, the user can optimize the neural network model without providing a data set, and can also simultaneously optimize performance indicators in a plurality of dimensions.

The foregoing describes a processing process of the neural network architecture search method, and the following describes a search apparatus according to an embodiment of this application.

FIG. 2 is a diagram of a structure of a search apparatus according to an embodiment of this application. The search apparatus is an abbreviation of a neural network architecture search apparatus. The apparatus may be implemented as a part of the apparatus or the entire apparatus by using software, hardware, or a combination thereof. The apparatus according to this embodiment of this application may implement the process in the embodiment of this application shown in FIG. 4. The apparatus includes an interaction module 210 and a search module 220.

The interaction module 210 is configured to receive an optimization request, where the optimization request includes a model file and an optimization requirement of a to-be-optimized model, and the optimization requirement includes a performance requirement and a hardware requirement, and may be specifically configured to implement an interaction function in step 401 and perform an implicit step included in step 401.

The search module 220 is configured to perform neural architecture search processing in search space based on the model file, to obtain a neural network architecture that meets the optimization requirement, and may be specifically configured to implement a search function in step 402 and perform an implicit step included in step 402.

The interaction module 210 is further configured to return the neural network architecture, and may be specifically configured to implement an interaction function in step 403 and perform an implicit step included in step 403.

In a possible implementation, the performance requirement includes at least one of an inference latency, a recall rate, and accuracy, and the hardware requirement includes at least one of a hardware specification and an occupied memory size of an optimized model during deployment of the optimized model.

In a possible implementation, the search module 220 includes a data generation module 221 and a model search module 222.

The data generation module 221 is configured to: determine, based on the model file, at least one data generation model corresponding to the to-be-optimized model; and
generate a data set by using the at least one data generation model, where the data set includes training data, and distribution of the training data in the data set and training data for obtaining the to-be-optimized model meets a similarity condition.

The model search module 222 is configured to perform neural architecture search processing in the search space based on the data set, to obtain the neural network architecture that meets the optimization requirement.

In a possible implementation, the data generation module 221 is configured to:
determine, based on the model file, a data generation model corresponding to each label type of the to-be-optimized model; and
generate, by using the data generation model corresponding to each label type, training data corresponding to each label type, where the training data corresponding to each label type forms the data set.

In a possible implementation, the data generation module 221 is configured to:
for a target label type of the to-be-optimized model, generate, by using an initial data generation model corresponding to the target label type, at least one piece of training data corresponding to the target label type, where each piece of training data includes input data and a calibration predicted value;
input the input data of each piece of training data into the to-be-optimized model, to obtain an inference result corresponding to each piece of training data;
determine, based on the inference result corresponding to each piece of training data and the calibration predicted value of each piece of training data, a loss value corresponding to each piece of training data;
update a weight parameter of the initial data generation model based on the loss value corresponding to each piece of training data; and
determine, based on an updated initial data generation model, the data generation model corresponding to the target label type.

In a possible implementation, the data generation module 221 is further configured to:
before generating the at least one piece of training data corresponding to the target label type, obtain a target neural network model for generating data; and
perform random initialization on a weight parameter of the target neural network model, to obtain the initial data generation model corresponding to the target label type.

In a possible implementation, the optimization requirement further includes a type of inference data inferred by the to-be-optimized model, and the type of the inference data is a text type or an image type.

The data generation module 221 is further configured to:
obtain a target neural network model that generates the data of the same type as the type of the inference data.

In a possible implementation, the data generation model is a GAN model.

In a possible implementation, the model search module 222 is configured to:
optimize the search space based on the hardware requirement;
train a super net in an optimized search space based on the data set, to obtain a trained super net;
generate a plurality of pieces of training data by using the trained super net, where each piece of training data includes a performance indicator value indicated by a neural network model and the performance requirement;
train an evaluation model based on the plurality of pieces of training data, to obtain a trained evaluation model; and
obtain, through search based on the trained evaluation model, the plurality of pieces of training data, and an evolution algorithm, the neural network architecture that meets the performance requirement.

For a detailed process in which the search apparatus shown in FIG. 2 performs neural network architecture search, refer to descriptions in the foregoing embodiments. Details are not described herein again.

Division into the modules in this embodiment of this application is an example, and is merely logical function division. During actual implementation, another division manner may be used. In addition, the functional modules in embodiments of this application may be integrated in one processor, or may exist as physically independent. Alternatively, two or more modules may be integrated into one module. The integrated module may be implemented in a form of hardware, or may be implemented in a form of a software functional module.

If the integrated module is implemented in a form of a software function module and is sold or used as an independent product, the integrated module may be stored in a computer-readable storage medium. Based on such an understanding, the technical solutions of this application essentially, or the part contributing to the conventional technology, or all or a part of the technical solutions may be embodied in a form of a software product. The computer software product is stored in a storage medium, and includes several instructions for instructing a terminal device (which may be a personal computer, a mobile phone, a network device, or the like) or a processor (processor) to perform all or some steps of the method in embodiments of this application. The foregoing storage medium includes any medium that can store program code, such as a USB flash drive, a removable hard disk, a ROM, a RAM, a magnetic disk, or an optical disc.

An embodiment of this application further provides a computer program product including instructions. When the computer program product runs on a computing device, the computing device is enabled to perform the provided neural network architecture search method, or the computing device is enabled to implement a function of the provided search apparatus.

All or a part of the foregoing embodiments may be implemented by using software, hardware, firmware, or any combination thereof. When the software is used for implementation, all or a part of embodiments may be implemented in a form of a computer program product. The computer program product includes one or more computer instructions. When the computer program instructions are loaded and executed on a server or a terminal, all or some of the processes or functions based on embodiments of this application are generated. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial optical cable, an optical fiber, or a digital subscriber line) or wireless (for example, infrared, radio, or microwave) manner. The computer-readable storage medium may be any usable medium accessible by a server or a terminal, or a data storage device, such as a server or a data center, integrating one or more usable media. The usable medium may be a magnetic medium (for example, a floppy disk, a hard disk, or a magnetic tape), an optical medium (for example, a digital video disk (digital video disk, DVD)), a semiconductor medium (for example, a solid state drive).

A term "at least one" in this application includes two cases: "one" or "a plurality of'. A term "and/or" in this application includes three cases. For example, A and/or B includes three cases: A, B, and A and B.

The foregoing descriptions are merely example implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A neural network architecture search method, wherein the method comprises:
receiving an optimization request, wherein the optimization request comprises a model file and an optimization requirement of a to-be-optimized model, and the optimization requirement comprises a performance requirement and a hardware requirement;
performing neural architecture search processing in search space based on the model file, to obtain a neural network architecture that meets the optimization requirement; and
returning the neural network architecture.

2. The method according to claim 1, wherein the performance requirement comprises at least one of an inference latency, a recall rate, and accuracy, and the hardware requirement comprises at least one of a hardware specification and an occupied memory size of an optimized model during deployment of the optimized model.

3. The method according to claim 1 or 2, wherein the performing neural architecture search processing in search space based on the model file, to obtain a neural network architecture that meets the optimization requirement comprises:
determining, based on the model file, at least one data generation model corresponding to the to-be-optimized model;
generating a data set by using the at least one data generation model, wherein the data set comprises training data, and distribution of the training data in the data set and training data for obtaining the to-be-optimized model meets a similarity condition; and
performing neural architecture search processing in the search space based on the data set, to obtain the neural network architecture that meets the optimization requirement.

4. The method according to claim 3, wherein the determining, based on the model file, at least one data generation model corresponding to the to-be-optimized model comprises:
determining, based on the model file, a data generation model corresponding to each label type of the to-be-optimized model; and
the generating a data set by using the at least one data generation model comprises:
generating, by using the data generation model corresponding to each label type, training data corresponding to each label type, wherein the training data corresponding to each label type forms the data set.

5. The method according to claim 4, wherein the determining, based on the model file, at least one data generation model corresponding to the to-be-optimized model comprises:
for a target label type of the to-be-optimized model, generating, by using an initial data generation model corresponding to the target label type, at least one piece of training data corresponding to the target label type, wherein each piece of training data comprises input data and a calibration predicted value;
inputting the input data of each piece of training data into the to-be-optimized model, to obtain an inference result corresponding to each piece of training data;
determining, based on the inference result corresponding to each piece of training data and the calibration predicted value of each piece of training data, a loss value corresponding to each piece of training data;
updating a weight parameter of the initial data generation model based on the loss value corresponding to each piece of training data; and
determining, based on an updated initial data generation model, a data generation model corresponding to the target label type.

6. The method according to claim 5, wherein before the generating at least one piece of training data corresponding to the target label type, the method further comprises:
obtaining a target neural network model for generating data; and
performing random initialization on a weight parameter of the target neural network model, to obtain the initial data generation model corresponding to the target label type.

7. The method according to claim 6, wherein the optimization requirement further comprises a type of inference data inferred by the to-be-optimized model, and the type of the inference data is a text type or an image type; and
the obtaining a target neural network model for generating data comprises:
obtaining the target neural network model that generates the data of the same type as the type of the inference data.

8. The method according to any one of claims 3 to 7, wherein the data generation model is a generative adversarial network GAN model.

9. The method according to any one of claims 3 to 8, wherein the performing neural architecture search processing in the search space based on the data set, to obtain the neural network architecture that meets the optimization requirement comprises:
optimizing the search space based on the hardware requirement;
training a super net in an optimized search space based on the data set, to obtain a trained super net;
generating a plurality of pieces of training data by using the trained super net, wherein each piece of training data comprises a performance indicator value indicated by a neural network model and the performance requirement;
training an evaluation model based on the plurality of pieces of training data, to obtain a trained evaluation model; and
obtaining, through search based on the trained evaluation model, the plurality of pieces of training data, and an evolution algorithm, the neural network architecture that meets the performance requirement.

10. A neural network architecture search apparatus, wherein the apparatus comprises:
an interaction module, configured to receive an optimization request, wherein the optimization request comprises a model file and an optimization requirement of a to-be-optimized model, and the optimization requirement comprises a performance requirement and a hardware requirement; and
a search module, configured to perform neural architecture search processing in search space based on the model file, to obtain a neural network architecture that meets the optimization requirement, wherein
the interaction module is further configured to return the neural network architecture.

11. The apparatus according to claim 10, wherein the performance requirement comprises at least one of an inference latency, a recall rate, and accuracy, and the hardware requirement comprises at least one of a hardware specification and an occupied memory size of an optimized model during deployment of the optimized model.

12. The apparatus according to claim 10 or 11, wherein the search module comprises a data generation module and a model search module, wherein
the data generation module is configured to: determine, based on the model file, at least one data generation model corresponding to the to-be-optimized model; and
generate a data set by using the at least one data generation model, wherein the data set comprises training data, and distribution of the training data in the data set and training data for obtaining the to-be-optimized model meets a similarity condition; and
the model search module is configured to perform neural architecture search processing in the search space based on the data set, to obtain the neural network architecture that meets the optimization requirement.

13. The apparatus according to claim 12, wherein the data generation module is configured to:
determine, based on the model file, a data generation model corresponding to each label type of the to-be-optimized model; and
generate, by using the data generation model corresponding to each label type, training data corresponding to each label type, wherein the training data corresponding to each label type forms the data set.

14. The apparatus according to claim 13, wherein the data generation module is configured to:
for a target label type of the to-be-optimized model, generate, by using an initial data generation model corresponding to the target label type, at least one piece of training data corresponding to the target label type, wherein each piece of training data comprises input data and a calibration predicted value;
input the input data of each piece of training data into the to-be-optimized model, to obtain an inference result corresponding to each piece of training data;
determine, based on the inference result corresponding to each piece of training data and the calibration predicted value of each piece of training data, a loss value corresponding to each piece of training data;
update a weight parameter of the initial data generation model based on the loss value corresponding to each piece of training data; and
determine, based on an updated initial data generation model, a data generation model corresponding to the target label type.

15. The apparatus according to claim 14, wherein the data generation module is further configured to:
before generating the at least one piece of training data corresponding to the target label type, obtain a target neural network model for generating data; and
perform random initialization on a weight parameter of the target neural network model, to obtain the initial data generation model corresponding to the target label type.

16. The apparatus according to claim 15, wherein the optimization requirement further comprises a type of inference data inferred by the to-be-optimized model, and the type of the inference data is a text type or an image type; and
the data generation module is further configured to:
obtain the target neural network model that generates the data of the same type as the type of the inference data.

17. The apparatus according to any one of claims 12 to 16, wherein the data generation model is a generative adversarial network GAN model.

18. The apparatus according to any one of claims 12 to 17, wherein the model search module is configured to:
optimize the search space based on the hardware requirement;
train a super net in an optimized search space based on the data set, to obtain a trained super net;
generate a plurality of pieces of training data by using the trained super net, wherein each piece of training data comprises a performance indicator value indicated by a neural network model and the performance requirement;
train an evaluation model based on the plurality of pieces of training data, to obtain a trained evaluation model; and
obtain, through search based on the trained evaluation model, the plurality of pieces of training data, and an evolution algorithm, the neural network architecture that meets the performance requirement.

19. A neural network architecture search computing device, wherein the computing device comprises a processor and a memory, wherein
the memory stores computer instructions; and
the processor executes the computer instructions, to implement the method according to any one of claims 1 to 9.

20. A computer-readable storage medium, wherein the computer-readable storage medium stores computer instructions, and when the computer instructions in the computer-readable storage medium are executed by a computing device, the computing device is enabled to perform the method according to any one of claims 1 to 9.
